Europäisches Patentamt

European Patent Office

Office européen des brevets

(19)

(11) **EP 0 520 846 B1**

(12) **FASCICULE DE BREVET EUROPEEN**

(45) Date de publication et mention
de la délivrance du brevet:
**20.08.1997  Bulletin 1997/34**

(51) Int Cl.⁶: **F16D 3/20**

(21) Numéro de dépôt: **92401451.7**

(22) Date de dépôt: **26.05.1992**

(54) **Joint de transmission articulé à quadruple liaison d'entraînement**

Antriebsgelenk mit vier Antriebsverbindungen

Articulated transmission joint with four drive connections

(84) Etats contractants désignés:
**DE ES FR GB IT**

(30) Priorité: **28.06.1991  FR 9108048**

(43) Date de publication de la demande:
**30.12.1992  Bulletin 1992/53**

(73) Titulaire: **GKN GLAENZER SPICER
F-78955 Carrières-sous-Poissy (FR)**

(72) Inventeur: **Orain, Michel
F-78700 Conflans-Sainte-Honorine (FR)**

(74) Mandataire: **Polus, Camille et al
c/o Cabinet Lavoix
2, Place d'Estienne d'Orves
75441 Paris Cedex 09 (FR)**

(56) Documents cités:
**FR-A- 2 566 858          GB-A- 2 174 477
US-A- 2 670 614**

**EP 0 520 846 B1**

## Description

La présente invention concerne un joint de transmission articulé à quadruple liaison d'entraînement, du type décrit dans le préambule de la revendication 1.

On connaît d'après le FR-A-2 566 858, un tel oint de transmission comprenant un croisillon dont les quatre bras radiaux, reliés à l'un des côtés de la transmission, sont engagés dans quatre couloirs longitudinaux reliés à l'autre côté de la transmission.

De tels joints sont capables de transmettre des vitesses de rotation très élevées sans frottement ni usure significatifs, et sans qu'aucune vibration inhérente à la cinématique du joint ne soit transmise aux arbres d'entrée et de sortie. En effet, d'une part le joint est homocinétique, et il est d'autre part capable d'effectuer une révolution complète avec stricte immobilité de ses axes géométriques d'entrée et de sortie, même lorsqu'ils forment un angle entre eux. Au contraire, avec un joint articulé ayant seulement une triple liaison d'entraînement (joint à tripode et trois couloirs), l'un au moins des axes effectue un léger mouvement planétaire au cours d'une révolution, et ceci produit des vibrations à très haute vitesse.

Pour que les quatre liaisons d'entraînement puissent coexister sans tension mécanique dans le joint, il est nécessaire que les couloirs ou les tourillons soient des éléments montés oscillants par rapport au côté de la transmission auquel ils sont associés.

En effet, lors du fonctionnement sous angle, lorsque le plan des axes des deux organes du joint forme un angle par rapport à chacun des axes de tourillons, les centres des tourillons ne se trouveraient plus dans l'axe des couloirs si les tourillons ou les couloirs n'avaient pas une possibilité de se décaler légèrement.

Le décalage nécessaire pour chaque couloir ou tourillon est opposé à celui qui est nécessaire pour ses deux voisins. Les éléments oscillants (couloirs ou tourillons) sont couplés angulairement entre eux pour imposer cette opposition de phase entre chaque élément oscillant et ses deux voisins. En l'absence d'un tel couplage, tous les éléments oscillants se coucheraient dans le même sens sous l'action du couple à transmettre.

Ainsi, il y a quatre éléments oscillants et à tout instant, leurs mouvements sont égaux et opposés, de sorte que les forces d'inertie qui en résultent s'annulent entre elles et ne produisent aucune vibration torsionnelle sur l'un ou l'autre des côtés de la transmission. Par conséquent, malgré l'oscillation des éléments oscillants, les joints à quadruple liaison d'entraînement sont très bien adaptés non seulement pour les arbres de transmission latéraux aboutissant aux roues, mais aussi pour les vitesses de rotation plus élevées, par exemple 6000 t/min, que l'on rencontre en amont du différentiel notamment dans les arbres de transmission longitudinaux sur les véhicules à propulsion arrière ou à quatre roues motrices. De plus, sur ces joints, les angles de brisure maximum rencontrés en pratique sont très faibles, ce qui limite l'amplitude des oscillations des éléments oscillants, et aussi l'amplitude du mouvement de va et vient que doit effectuer le long de chaque bras de tourillon le galet sphérique qui y est généralement prévu. Ce mouvement est nécessaire pour que ce galet reste centré sur l'axe du couloir correspondant tout le long de chaque révolution du joint lorsque le joint fonctionne sous angle.

La fréquence d'oscillation des éléments oscillants est double de la vitesse de rotation du joint. Ainsi, pour une vitesse de rotation de 100 t/s (6000 t/min), par exemple, la fréquence d'oscillation des éléments oscillants est de 200 hertz. Bien que l'amplitude des mouvements d'oscillation soit faible -quelques degrés-, les forces d'inertie mises en jeu sont, à de telles fréquences, loin d'être négligeables.

On connaît d'après le FR-A-2 550 292, un galet pseudo-sphérique spécialement conçu pour les joints homocinétiques à haute vitesse. Ce galet pseudo-sphérique, monté coulissant sur un bras du croisillon, peut contacter simultanément et sans dommage les rives de ses deux chemins de roulement pendant les relaxations du couple ou à l'instant des inversions de couple alors que l'effet de la force centrifuge est prépondérant par rapport à celui du couple à transmettre.

Or dans le joint selon le FR-A-2 566 858, c'est la force de contact entre les couloirs et les bras du croisillon (c'est-à-dire, dans l'exemple, entre les couloirs et les galets prévus sur les bras du croisillon), qui assure l'oscillation alternative des couloirs -ou des tourillons- oscillants en leur communiquant les forces alternatives qui leur sont nécessaires pour vaincre leur inertie. Les forces d'inertie alternatives à vaincre peuvent être du même ordre de grandeur que la force centrifuge appliquée aux galets. Cette force centrifuge n'est donc pas capable, à elle seule, de maintenir le galet simultanément appuyé sur les deux chemins de roulement. Il peut en résulter des ruptures de contact et des percussions sonores de reprise de contact entre les galets et leurs chemins de roulement, lorsque les galets s'appuient alternativement sur un chemin et sur l'autre pour produire la force alternative d'oscillation. Ceci est surtout vrai lorsque le couple transmis est trop faible pour privilégier l'appui sur l'un des deux chemins de roulement.

Le but de la présente invention est de rendre silencieux le fonctionnement d'un joint de transmission articulé à quadruple liaison d'entraînement, même sous faible charge.

A cet effet, l'invention a pour objet le joint de transmission articulé à quadruple liaison d'entraînement conforme à la revendication 1.

L'invention est basée sur la constatation suivante: la force centrifuge produite par une masse en rotation est pro-

2

portionnelle au carré de la vitesse de rotation. D'autre part, la fréquence d'un mouvement oscillatoire soumis à une force de rappel vers une position neutre est proportionnelle à la racine carrée de la force de rappel. Par conséquent, si la force de rappel est une force centrifuge, la fréquence propre du mouvement oscillatoire est proportionnelle à la vitesse de rotation. Par conséquent, si la fréquence propre des éléments oscillants est égale au double de la vitesse de rotation du joint pour une vitesse de rotation donnée, cette relation sera vérifiée pour toutes les vitesses de rotation du joint. En d'autres termes, à toutes les vitesses de rotation du joint, la fréquence d'oscillation imposée aux éléments oscillants par la cinématique du joint correspond à leur fréquence propre d'oscillation, de sorte que la force cyclique à appliquer aux éléments oscillants pour entretenir leur mouvement oscillant n'est plus qu'une très faible force de compensation des éventuels frottements résiduels dans le montage oscillant des éléments oscillants.

Ainsi, l'invention propose une disposition particulière qui annule sensiblement en totalité la force alternative à fournir de l'extérieur aux éléments oscillants pour entretenir leur oscillation, ce qui rend impossible toute rupture cyclique de contact entre les bras radiaux et les couloirs, et assure donc le fonctionnement silencieux du joint.

Par ailleurs les quatre éléments de conduite ou galets étant disposés symétriquement deux à deux autour de l'arbre, les légers frottements résiduels de roulement dans les couloirs se compensent axialement très exactement deux à deux. Il en résulte que le joint est parfaitement neutre axialement, aucune réaction axiale ne pouvant être répercutée sur l'arbre lorsque le joint fonctionne sous angle et sous couple. Cet avantage important permet l'utilisation de ce joint sur les transmissions latérales de voitures à traction avant requérant un haut niveau de confort.

De plus, la disposition selon l'invention n'exige ni artifice ni pièce supplémentaire. Elle n'entraîne donc pratiquement aucun coût supplémentaire à la fabrication.

Selon une particularité préférentielle de l'invention, l'agencement est tel que le moment de rappel des éléments oscillants vers la position neutre est proportionnel à leur angle instantané d'oscillation. De la sorte, l'annulation de la force alternative à fournir aux éléments oscillants est assurée quel que soit l'angle de travail du joint. En effet, l'amplitude d'oscillation des éléments oscillants est variable, et, plus précisément, croît sensiblement comme le carré de l'angle de travail du joint. Mais comme il y a proportionnalité entre angle instantané d'oscillation et moment de rappel, la fréquence propre demeure indépendante de l'amplitude d'oscillation, conformément à la loi des mouvements isochrones, donc indépendante de l'angle de travail du joint.

D'autres particularités et avantages de l'invention ressortiront encore de la description ci-après, relative à des exemples non limitatifs.

Aux dessins annexés:

- la figure 1 est une vue en bout, avec coupe transversale partielle, d'un joint homocinétique suivant l'invention, en position alignée;
- la figure 2 est une vue en élévation du même joint en position brisée, sous un angle d'environ 35° situé dans le plan de l'axe de deux tourillons opposés, l'organe à couloirs étant vu en coupe dans ce plan ;
- la figure 3 est une vue partielle de face du joint de la figure 2, avec coupe transversale partielle;
- la figure 4 est une vue analogue à la figure 3 mais après une fraction de tour, de sorte que l'angle de brisure est maintenant situé en dehors des plans des axes des couloirs opposés;
- la figure 5 est une vue partielle en coupe d'un mode de réalisation particulier du joint des figures 1 à 4;
- la figure 6 est une vue de dessus d'un couloir de la figure 5, avec demi-coupe selon le plan VI-VI de la figure 7;
- la figure 7 est une vue selon la ligne VII-VII de la figure 6;
- les figures 8 à 10 sont des vues partielles en bout de trois autres réalisations particulières du joint de transmission selon l'invention ;
- la figure 11 est une vue en bout, avec coupe partielle, arrachement et omission d'un galet, d'encore un autre mode de réalisation de l'invention ; et
- la figure 12 est une vue en coupe selon le plan XII-XII de la figure 11.

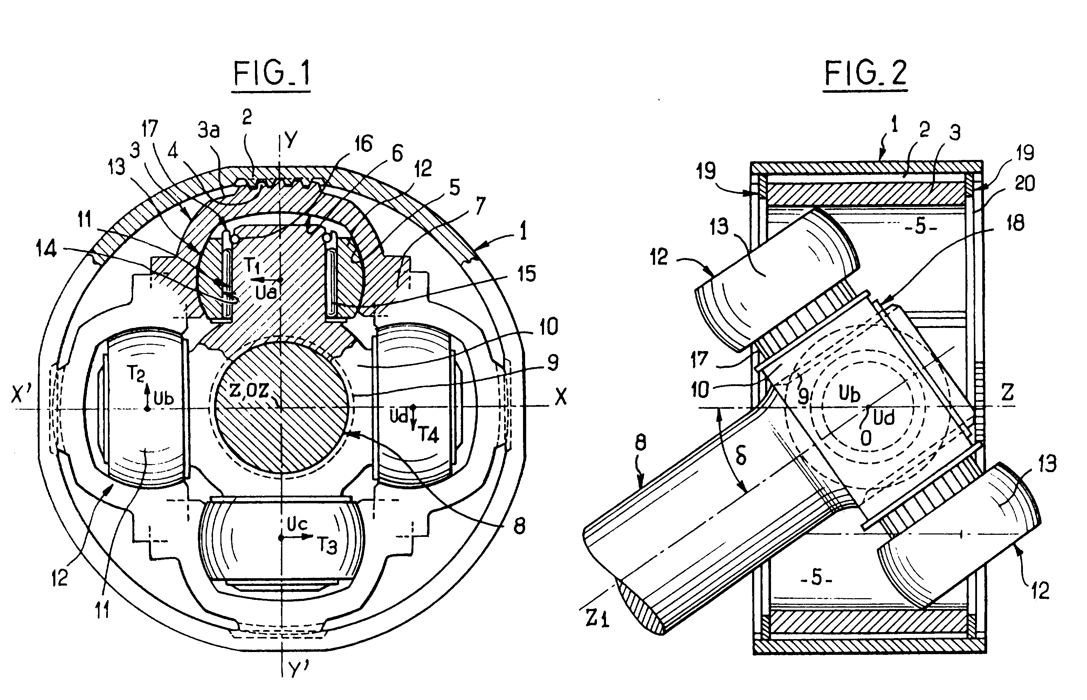

Le joint homocinétique représenté aux figures 1 à 4 comprend un premier organe ou organe extérieur constitué par un fût cylindrique 1 qui peut être fixé par exemple au moyen d'un flasque et de boulons, ou par tout autre moyen connu, sur l'un des organes mécaniques à relier. Ce fût comporte dans sa surface interne quatre zones méplates ou à faible courbure, formant berceaux d'oscillation 2 dans lesquelles sont ménagées des cannelures longitudinales. Ces berceaux s'étendent sur des segments d'environ 30° chacun.

Quatre couloirs 3 en forme de gouttière présentent sur la face radialement extérieure de leur voûte une face de roulement 4 par laquelle ils reposent de manière oscillante sur les berceaux d'oscillation du fût. Les cannelures internes du fût engrènent avec des cannelures longitudinales de même module usinées sur la face de roulement 4. Le rayon extérieur moyen de cette face de roulement 4 est inférieur à celui des berceaux cannelés 2 du fût, afin de permettre aux couloirs d'osciller en roulant sans glisser à l'intérieur du fût.

La section de ces couloirs comprend intérieurement deux segments circulaires concentriques 5, centrés en un point Va, Vb, Vc ou respectivement Vd et situés en vis-à-vis, ces deux segments étant raccordés par une voûte intérieure 6 qui peut d'ailleurs assurer une continuité cylindrique entre les deux segments.

Les deux bords des couloirs portent des cannelures 7 usinées sur des surfaces cylindriques dont l'axe correspond à peu près à la cannelure médiane de la face de roulement 4 de ces couloirs. Ainsi, lorsqu'ils sont en place à l'intérieur du fût, les quatre couloirs peuvent osciller sans jeu et sans dur par roulement des dentures ou cannelures à flancs en développante 2, 4 et 7 en contact les unes avec les autres, à la manière d'engrenages satellites en prise à l'intérieur d'une roue à denture interne, avec cette particularité que, compte tenu du couplage angulaire par les dentures 7, chaque couloir oscille en opposition de phase par rapport à ses deux voisins, comme on le verra plus en détail plus loin.

Le joint comprend également un arbre 8 soudé ou fixé au moyen de cannelures 9 à un croisillon 10, constituant le deuxième organe du joint, et retenu axialement par un jonc 18. Ce croisillon comprend quatre tourillons 11 orientés suivant deux axes perpendiculaires et coplanaires et sur lesquels sont montés des galets 12 à surface extérieure sphérique 13. Ces galets sont montés coulissants et rotatifs sur les tourillons, soit par contact direct entre leur alésage 14 et le tourillon, soit avec interposition d'aiguilles 15 retenues axialement par un dispositif à jonc 16 et rondelle de forme 17, connu en soi.

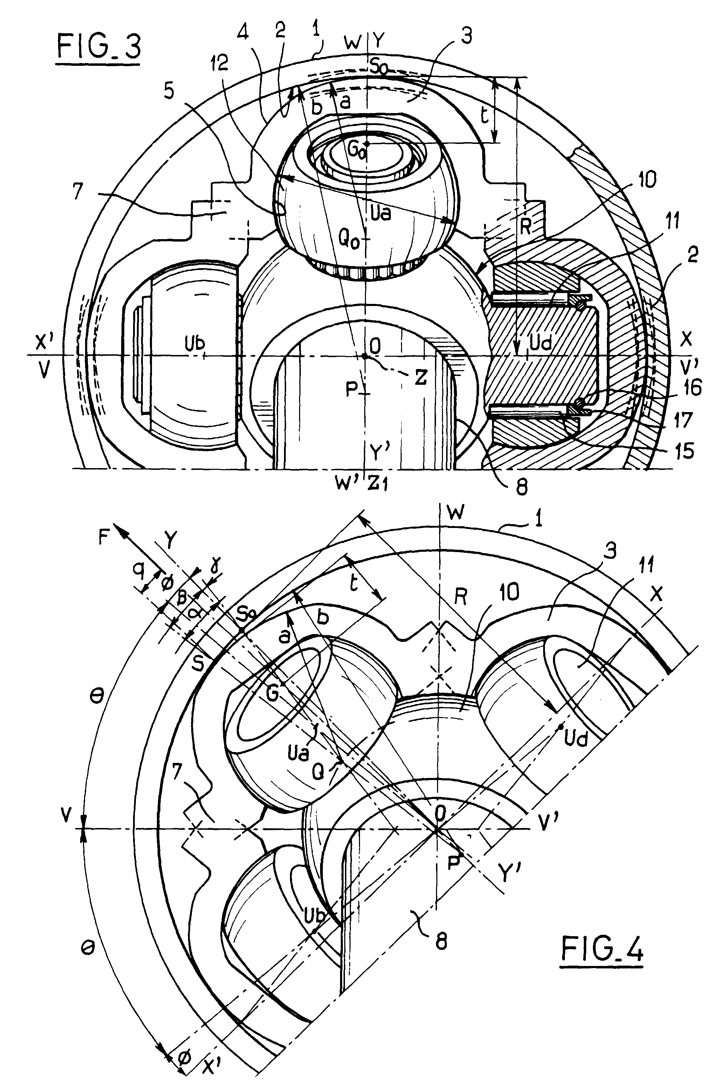

Ces galets, de courbure similaire à celles des surfaces 5 des couloirs qui constituent des chemins de roulement, peuvent se déplacer librement à l'intérieur de ces couloirs. Ils roulent sur les chemins de roulement 5 qui sont trempés superficiellement pour pouvoir supporter des charges importantes sans déformation ni usure. Les couloirs 3 sont par exemple retenus axialement par des joncs élastiques 19 logés dans des gorges 20 usinées aux extrémités du fût 1. La forme sphérique des galets permet en outre aux tourillons 11 de s'incliner longitudinalement dans les couloirs, comme représenté à la figure 2, lorsque le joint fonctionne sous angle, et aussi de s'y incliner latéralement, comme représenté à la figure 4, lorsque les couloirs sont eux-mêmes écartés de leur position neutre d'oscillation, comme on le verra en détail plus loin.

Le fonctionnement de base de ce premier mode de réalisation d'un joint suivant l'invention est le suivant, étant noté qu'aux figures 3 et 4, les cannelures entre couloirs et fût et entre les couloirs eux-mêmes ont été omises pour simplifier les schémas.

En ce qui concerne tout d'abord la cinématique des couloirs 3, on voit que lorsque le couloir centré en $U_a$ tourne en sens horaire, les couloirs centrés en $U_b$ et $U_d$ tournent en sens anti-horaire, et par conséquent, le couloir centré en $U_c$ (non visible à la figure 4) tourne en sens horaire. Le point de contact entre les surfaces 2 et 4, qui constitue le centre instantané de rotation des couloirs relativement au fût, et qui est appelé S à la figure 4 et $S_o$ dans le cas particulier de la position neutre représenté à la figure 3, se déplace de part et d'autre de la cannelure médiane (point $S_o$) des berceaux 2. Il en résulte que $U_a$ et $U_b$ d'une part, et $U_c$ et $U_d$, d'autre part, se rapprochent les uns par rapport aux autres, alors que par ailleurs $U_a$ et $U_d$ d'une part, et $U_b$ et $U_c$, d'autre part, s'éloignent. Si l'on inverse le sens de rotation de l'un des couloirs, toutes les rotations et tous les déplacements relatifs sont également inversés. Les déplacements des points $U_a$ à $U_d$ représentés par les flèches $T_1$ à $T_4$ sont égaux en valeur absolue, dirigés circonférentiellement, et de sens alternés. Il en résulte selon une des caractéristiques de cette demande que les droites $U_aU_c$ d'une part, et $U_bU_d$, d'autre part, passent à tout moment par le centre P du fût. On en déduit selon une deuxième caractéristique que la rotation de $U_aU_c$ est égale et de sens opposé à la rotation de $U_bU_d$.

Lorsqu'un couple C est appliqué à l'arbre 8 et donc au croisillon 10, les couloirs 3 ne peuvent se coucher relativement au fût sous l'effet de ce couple, car leurs tendances à un tel mouvement se contrarient par le jeu des dentures 7 de conjugaison qui a pour effet de prévenir toute inclinaison des couloirs dans un même sens sous l'action du couple. Par contre, les efforts appliqués aux galets sont égaux et tous les couloirs transmettent une égale part du couple, soit chacun: C/4. Ceci se vérifie même en dépit d'un défaut de division circulaire, soit du croisillon, soit des berceaux internes 2 du fût. Autrement dit, la liaison croisillon/couloirs est isostatique.

La mise sous angle δ de l'arbre ne provoque aucune déviation des couloirs par rapport à leur position neutre d'oscillation lorsque la position angulaire du fût 1 autour de son axe est telle que l'angle de brisure δ est dans le même plan que deux des axes de tourillon (figure 3).

La figure 4 représente le même joint vu selon l'axe du fût après une fraction de tour du fût 1 et de l'arbre 8 autour de leurs axes respectifs avec conservation de l'angle de brisure δ, de sorte que les axes $U_aU_c$ et $U_bU_d$ du croisillon font maintenant un angle de 45° avec l'axe géométrique de brisure VV'. Ces axes $U_aU_c$ et $U_bU_d$, calés de construction à 90° -donc en vraie grandeur- font dans cette vue avec VV' un angle Θ inférieur à 45°. Pour accommoder ce déplacement, les couloirs ont oscillé d'un angle γ relativement au fût 1 et symétriquement relativement à l'axe VV' comme ils y sont astreints par le jeu des dentures 2, 4 et 7. Il en résulte que l'axe VV' bissecteur des tourillons du croisillon, est aussi bissecteur des axes rectangulaires XX' et YY' du fût 1. Autrement dit, la brisure autour d'un axe bissecteur des tourillons n'entraîne aucune rotation de l'arbre 8 relativement au fût 1, ce qui montre que le joint est homocinétique.

Donc le plan contenant l'axe OZ du fût 1 et l'axe OZ1 de l'arbre, ou plan de brisure, dont la trace est figurée par la ligne OW, est ici calé à un angle de phase de 45° relativement à l'axe OY du fût passant par la position $S_o$ du contact entre le fût et le couloir de centre $U_a$ lorsqu'il est en position neutre d'oscillation.

Pour cet angle de phase de 45°, l'axe du tourillon $OU_a$ présente un décalage angulaire ø maximum avec OY et fait avec le plan bissecteur OV un angle Θ tel que:

$$\text{tg}\,\Theta = \cos\delta \ \text{avec}\ \Theta = \frac{\Pi}{2} - \o$$

Pour l'exemple correspondant à la figure 4, on aurait: $\o = 4°$, 10

A noter que $\o$ représenterait, dans un joint de cardan conventionnel le défaut d'homocinétie inhérent à cette articulation.

On constate qu'à une variation de l'angle de phase de 0° à 45° soit 1/8 de tour, correspond une oscillation d'un quart de période, autrement dit la fréquence d'oscillation des couloirs est égale au double de la vitesse de rotation du joint.

Remarque: L'angle de travail $\delta = 30°$ a été choisi pour que le décalage angulaire $\Theta$ et l'angle d'oscillation des couloirs soient relativement importants et faciles à distinguer sur les figures 3 et 4.

Pour un angle de travail $\delta = 15°$ correspondant à un maximum pratique dans les applications à haute vitesse, le décalage angulaire $\Theta$ et l'angle d'oscillation $\gamma$ seraient quatre fois plus petits.

Conformément à l'invention, les rayons de courbure a et b (figure 4) des faces de roulement 4 et berceaux 3 respectivement sont tels, par rapport à la position du centre de gravité G de la masse soumise à la force centrifuge avec chaque couloir (il s'agit essentiellement de la masse totale du couloir et du galet puisque le centre du galet est obligé de rester sur l'axe géométrique du couloir) que la force centrifuge F engendrée par cette masse en raison de la rotation de l'arbre 8 et du fût 1 autour de leurs axes $OZ_1$ et $0Z$ constitue une force d rappel du couloir vers sa position neutre (position d'inclinaison nulle).

Pour cela, il faut que les valeurs de a et b soient déterminées pour que, pour chaque inclinaison du couloir, le déplacement de la position $S_o$ (figure 3) à une position telle que S (figure 4) du point de contact entre la face de roulement 4 et son berceau 2 soit suffisant pour que la ligne d'action OG de la force centrifuge passe entre les positions $S_o$ et S, et non pas au-delà du point S par rapport à la position $S_o$, bien que le centre de gravité G (figure 4) se soit lui-même déplacé vers la ligne OS par rapport à sa position initiale $G_o$ (figure 3).

On voit que si on modifie l'exemple représenté pour que $a = O$, c'est-à-dire pour que chaque couloir soit articulé au fût 1, la condition précitée ne pourrait pas être réalisée. Au contraire, la force centrifuge tendrait à accroître toute inclinaison des couloirs.

De plus, le berceau d'oscillation 2 usiné à l'intérieur du fût 1 et la face de roulement 4 du couloir sont profilés de telle manière, en particulier leurs rayons b et a sont tels, que la fréquence propre d'oscillation du couloir sous l'effet de rappel dû à la force centrifuge, fréquence exprimée en cycles par unité de temps, soit égale à deux fois la vitesse de rotation du joint, exprimée en nombre de tours par la même unité de temps.

Plus spécifiquement, dans le cas illustré à la figure 4, le plan de symétrie QUa du couloir 3, s'incline d'un angle $\gamma$ pour contenir le centre $U_a$ commun au galet sphérique et aux pistes circulaires du couloir.

Le centre d'oscillation instantané du couloir passe de $S_o$ (figure 3) en S (figure 4) sur le prolongement de la ligne des centres PQ à une distance q de la ligne d'action de la force centrifuge F passant par le centre O du joint et par le centre de gravité G du couloir. Il est clair que le moment: Fxq de la force centrifuge F relativement au centre d'oscillation S tend à ramener le couloir en position neutre.

Par ailleurs, on fait selon l'invention en sorte que, pour les petites amplitudes considérées, le moment Fxq croisse linéairement comme l'angle $\gamma$ d'inclinaison du couloir. Ainsi, la fréquence naturelle d'oscillation du couloir est indépendante de l'amplitude de l'oscillation, donc de l'angle de travail $\delta$ du joint.

De plus, on sait que dans un tel système, la fréquence naturelle d'oscillation, quelle que soit l'amplitude d'oscillation (compte tenu du paragraphe précédent) croit comme la racine carrée du moment de rappel Fxq. Or, comme la force centrifuge F est elle-même proportionnelle au carré de la vitesse de rotation, il en découle que la fréquence naturelle d'oscillation croît exactement comme la vitesse de rotation du joint.

Il suffit donc, selon la présente invention, de déterminer les rayons de roulement oscillant a et b du couloir et du barillet en fonction de la masse du couloir et de son inertie relative à l'axe d'oscillation, pour établir une fréquence d'oscillation naturelle qui demeurera toujours égale au double de la vitesse de rotation du joint. On peut considérer que l'inertie du couloir est indépendante de la position de S pour les petites amplitudes en cause. De plus, selon la présente invention, les rayons de roulement oscillant a et b sont rendus compatibles avec le type de liaison articulée choisie pour la conjugaison intercouloir.

Ainsi, selon la présente invention, l'oscillation des couloirs à une fréquence double de la vitesse de rotation, qui rend le joint parfaitement homocinétique, s'effectue sans emprunter de force motrice alternative aux galets et donc sans possibilité de rupture périodique de contact entre les galets et les pistes des couloirs.

Condensé théorique:

Couple de rappel dynamique exercé sur le couloir pendant la rotation du joint à la vitesse angulaire $\omega$ :

$$Fq = k \, \gamma \, M\omega^2 \qquad (1)$$

On voit que ce couple de rappel est proportionnel:

- à l'inclinaison $\gamma$ du couloir
- à la masse totale M du couloir et du galet
- au carré de la vitesse angulaire $\omega$ de rotation du joint
- à un coefficient géométrique k dépendant des rayons de roulement a et b et de la position du centre de gravité G défini par R et par t (figure 3).

Pour les petites oscillations, seules considérées ici, on trouve:

$$k = \frac{ab}{b-a} (R - t) - Rt \qquad (2)$$

L'inertie du couloir relative au centre d'oscillation est: $I_o = m \, \rho^2$ où m est la masse du couloir et $\rho$ le rayon de giration moyen.

La fréquence naturelle d'oscillation est:

$$f = \frac{\omega}{2\pi\rho} \sqrt{\frac{kM}{m}} \qquad (3)$$

Or on impose une fréquence propre f égale à deux fois la vitesse de rotation N du joint en tours/seconde (avec: $N = \frac{\omega}{2\pi}$). Donc on écrit:

$$2N = \frac{N}{\rho} \sqrt{\frac{kM}{m}} \qquad (4)$$

Ce qui revient à imposer en tenant compte de la relation (2):

$$k = 4\rho^2 \frac{m}{M} = \frac{ab}{b-a} (R-t) - Rt = p \, (R-t) - Rt \qquad (5)$$

avec:

$$\frac{ab}{b-a} = p \text{ ou } \frac{1}{p} = \frac{1}{a} + \frac{1}{b} \qquad (6)$$

En utilisant (5):

$$p = \left( 4\rho^2 \frac{m}{M} + Rt \right) \frac{1}{R-t} \qquad (7)$$

"p": rayon équivalent imposé qu'aurait la face de roulement 4 du couloir si elle oscillait sur un berceau plan.

Par ailleurs, l'étude cinématique montre que le rayon primitif "e" de l'engrènement intercouloir est également une fonction simple de "p".

On trouve:

$$e = \frac{1}{\sqrt{2}} (R-p) = \frac{1}{\sqrt{2}} \left[ R - \left( 4p^2 \frac{m}{M} + Rt \right) \frac{1}{R-t} \right] \qquad (8)$$

Pour: e > 0 le rayon primitif de l'engrènement intercouloir est convexe

e = 0 l'engrènement est ponctuel (axe d'articulation)

e < 0 le rayon primitif est convexe.


Cette relation (8) définit donc le mode et les dimensions de la liaison articulée possible entre couloirs 3 contigus, en fonction du profil de leur section et fixe les proportions à respecter pour obtenir le résultat recherché, objet de cette demande de brevet.

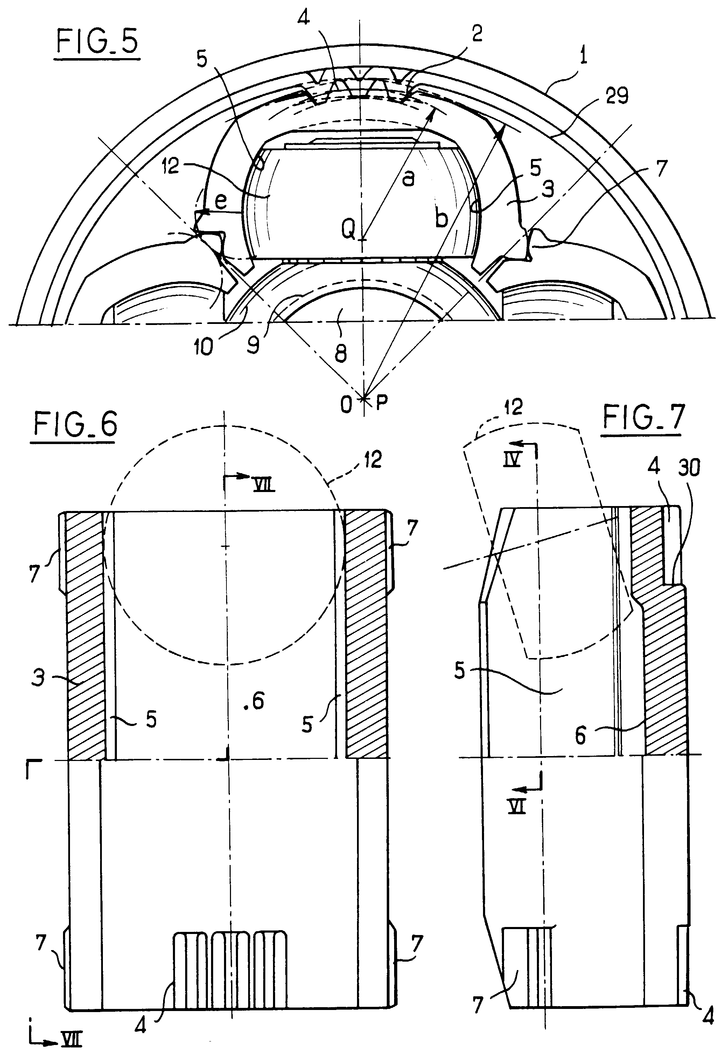

Dans l'exemple représenté aux figures 5 à 7, les dentures dorsales 4 de rayon primitif a et latérales 7 de rayon primitif e à profils en développante sont conformées à froid dans une ébauche en tôle pliée en U. Les dentures n'occupent qu'une partie de la longueur à chacune des extrémités du couloir comme le montrent les figures 6 et 7. Sur le reste de la longueur il peut y avoir roulement entre faces libres ou au contraire léger jeu.

Les dentures internes 2 du fût 1 sont formées à l'intérieur d'une bande circulaire 29 qui n'est fixée à la paroi du fût 1 qu'après introduction des couloirs, pour pouvoir introduire les couloirs.

Les extrémités 30 des dentures 4 du couloir servent de retenue axiale du couloir par contact avec le bord de la bande circulaire dentée 29.

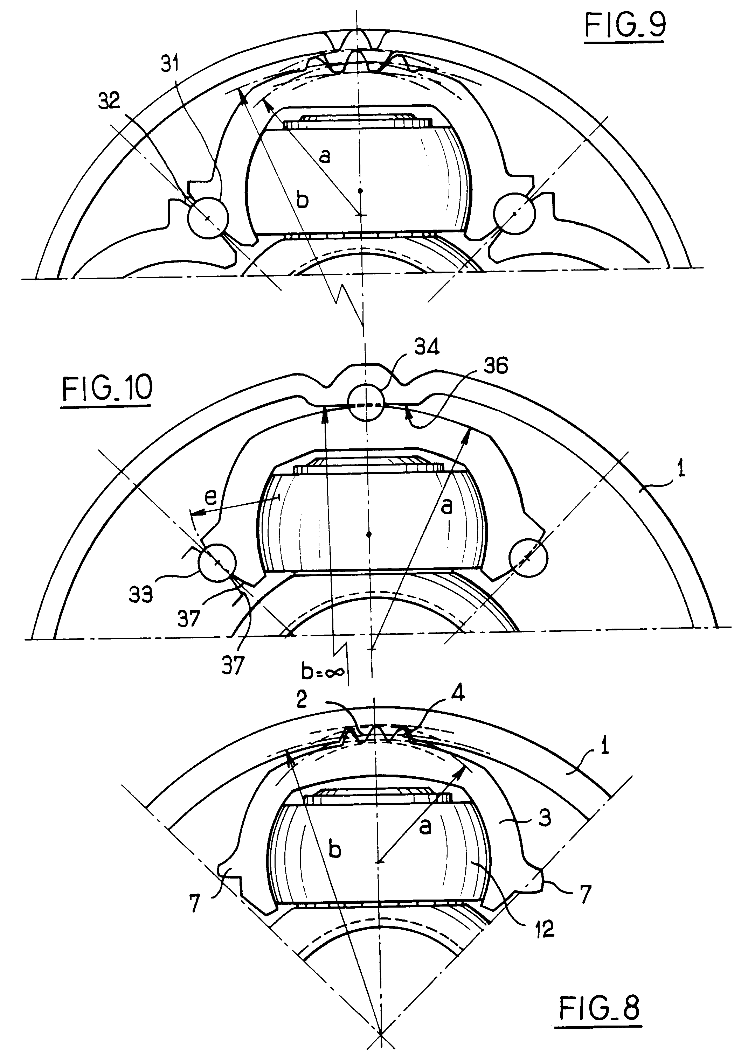

La figure 8 représente une version dans laquelle le couloir porte des dentures dorsàles 4 et latérales 7 analoaues à celles de la figure 5. Mais ici le couloir 3 est avantageusement réalisé à partir de bande laminée directement au profil final souhaité, y compris les dentures. Il suffit de la tronçonner à la longueur requise et de la traiter pour obtenir les couloirs terminés.

Dans ce cas, les dentures occupent toute la longueur du couloir. Les berceaux dentés 2 du fût peuvent être soit laminés à froid soit brochés.

La figure 9 représente une version dans laquelle la denture dorsale 4 du couloir 3 est formée à froid ou usinée.

La denture interne 2 du fût 1 est formée à froid.

La liaison intercouloir est assurée par des axes ou rouleaux 31 cylindriques, d'axe parallèle à l'axe du fût 1, qui correspondent du point de vue cinématique à une articulation ou encore à une denture de rayon primitif e de valeur zéro. Chaque rouleau 31 est engagé dans deux évidements semi-cylindriques, formant portées, appartenant chacun à l'un des couloirs 3. Des dégagements 32 situés de part et d'autre des portées des rouleaux permettent l'articulation relative des couloirs contigus.

La figure 10 représente une version dans laquelle la liaison intercouloir est assurée par des rouleaux 33 d'une manière similaire à celle de la figure 9. Ces rouleaux n'occupent qu'une portion de la longueur des couloirs qui s'appuient et roulent les uns sur les autres par des surfaces cylindriques 37 de rayon e. Les rouleaux 33 forment donc clavette empêchant les surfaces 37 de patiner les unes sur les autres. Chaque rouleau 33 occupe deux évidements semi-cylindriques formés chacun dans l'une des surfaces cylindriques de rayon e.

La liaison dorsale du couloir avec le barillet est assurée par des rouleaux cylindriques 34 qui transfèrent la force utile au fût 1.

Hors ces rouleaux, la face de roulement 4 du couloir présente un rayon de roulement a en appui sur le berceau 2 du fût constitué par une surface interne qui est plane donc de rayon b de valeur infinie. Les rouleaux 34, formant clavettes, occupent deux évidements semi-cylindriques ménagés respectivement dans la face de roulement 4 et dans le berceau 2.

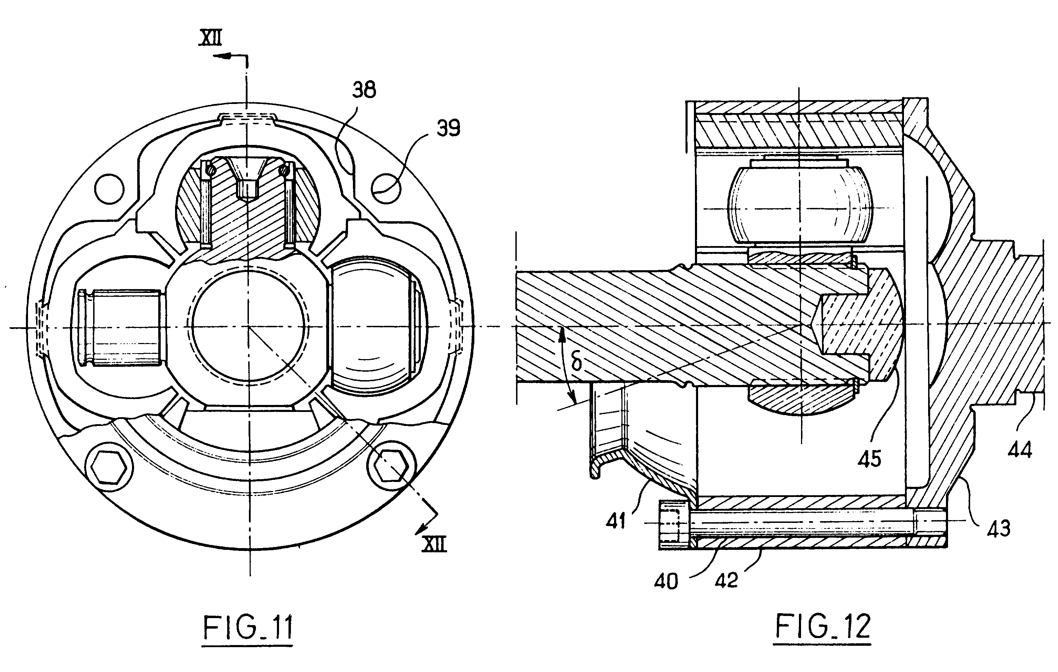

Les figures 11 et 12 représentent une version utilisable pour transmissions haute-vitesse ou transmissions latérales de traction avant et pour un angle de brisure δ maximum de 20°. Le barillet porte des renflements internes 38 utilisant l'espace laissé libre entre les couloirs. Ces renflements sont percés de trous longitudinaux 39 laissant passage à des vis 40 de fixation d'un capot 41 et du fût 42 sur une bride 43 solidaire de l'arbre moteur 44. Un bouton en matière plastique 45 emmanché à l'extrémité libre de l'arbre portant le croisillon assure la limitation amortie de la course de coulissement du joint par butée sur le fond de la bride.

Ces exemples de réalisation ne sont pas limitatifs et d'autres versions peuvent être établies qui observeraient les conditions propres à assurer, selon la présente invention, l'égalité de la fréquence dynamique naturelle d'oscillation des couloirs et de la fréquence d'oscillation imposée par la cinématique de ce joint homocinétique.

Le rayon de liaison intercouloir peut être négatif. Le rayon b des berceaux du fût peut être négatif c'est-à-dire que ces berceaux peuvent être convexes, auquel cas le rayon a de la face de roulement 4 des couloirs peut être infini (faces planes).

L'invention est applicable à un joint non coulissant, dont le centre O est fixe, par exemple selon la structure de base représentée à la figure 5 du FR-A-2 566 858.

On pourrait concevoir un joint dont les couloirs seraient ouverts radialement vers l'extérieur, et les bras radiaux seraient portés par la face interne du fût avec possibilité d'oscillation.

Les cannelures peuvent être hélicoïdales.

**Revendications**

1. Joint de transmission articulé à quadruple liaison d'entraînement, comprenant un premier organe (1) à quatre couloirs longitudinaux (3) et un deuxième organe (10) dont quatre tourillons radiaux (11) sont reçus chacun dans un couloir (3) avec possibilité de s'y déplacer longitudinalement et de s'y incliner longitudinalement et latéralement, ces deux organes (1, 10) ayant des axes respectifs (OZ1, OZ) qui peuvent être décalés angulairement l'un par rapport à l'autre, chaque couloir (3) s'ouvrant vers l'axe (OZ) de l'organe (1) auquel il est associé et constituant un élément oscillant roulant sans glissement par sa face radialement extérieur (4) de manière oscillante sur un berceau intérieur (2), de courbure différente, de l'organe (1) auquel il est associé, de façon à pouvoir osciller autour d'un axe ($S_o$, S) parallèle à l'axe (OZ) dudit organe associé (1) et décalé radialement par rapport à un centre ($U_a$, $U_b$, $U_c$, $U_d$) d'inclinaison latérale du tourillon (11) par rapport à son couloir (3), chaque couloir oscillant (3) étant couplé angulairement aux deux couloirs (3) adjacents pour osciller en opposition de phase par rapport à eux, caractérisé en ce que: les rayons de courbure (a,b) de la face de roulement des couloirs (3) d'une part, et des berceaux (2) d'autre part, sont choisis de manière que chaque couloir soit rappelé en position neutre par la force centrifuge (F) due à la rotation du joint, et en ce que la fréquence propre, exprimée en cycles par unité de temps, d'oscillation de chaque couloir (3) sous le rappel de la force centrifuge (F) à une vitesse donnée est sensiblement égale au double de cette vitesse exprimée en nombre de tours pendant ladite unité de temps; ce que pour chaque élément oscillant est vérifiée la relation

$$\frac{ab}{b-a} = (4\rho^2 \frac{m}{M} + Rt) \frac{1}{R-t}$$

dans laquelle

a = rayon de courbure de la face de roulement de l'élément oscillant
b = rayon de courbure de la face de roulement de l'organe associé
 = rayon de giration moyen du centre de gravité de l'élément oscillant
m = masse de l'élément oscillant
M = masse totale engendrant la force centrifuge de rappel de l'élément oscillant en position neutre
R = distance entre le point de roulement et l'axe de l'organe associé à l'élément oscillant
t = distance entre le point de roulement et le centre de gravité de l'élément oscillant, et en ce que le joint vérifie en outre sensiblement la relation suivante

$$e = \frac{1}{\sqrt{2}} \left[ R - (4\rho^2 \frac{m}{M} + Rt) \frac{1}{R-t} \right]$$

avec la table d'interprétation suivante:

e ≠ O: e représente le rayon de courbure de faces de roulement sans glissement par lesquelles les éléments oscillants sont couplés angulairement entre eux, et les faces sont convexes si e>O et concaves si e<O
e = O: chaque élément oscillant est articulé aux deux éléments oscillants voisins.

2. Joint selon la revendication 1, dans lequel la face radialement extérieure (4) des couloirs (3) et les berceaux (2) de l'organe associé (1) comprennent des dentures interengagées par l'appui oscillant des couloirs, caractérisé en ce que les dentures sont adjacentes aux deux extrémités axiales des couloirs (3) et séparées par des faces lisses entre les couloirs.

3. Joint selon la revendication 2, caractérisé en ce que les faces lisses sont des faces de roulement sans glissement.

4. Joint selon la revendication 2 ou 3, caractérisé en ce que la denture des berceaux est portée par au moins une bague rapportée (29) qui forme en même temps bague d'immobilisation axiale des couloirs (3).

5. Joint selon l'une des revendications 2 à 4, caractérisé en ce que les couloirs (3) sont des tôles pliées en U dans lesquelles les dentures des couloirs sont conformées à froid.

6. Joint selon la revendication 5, dans lequel la face radialement extérieure (4) des couloirs (3) et les berceaux (2) de l'organe associé (1) comprennent des dentures interengagées pour l'appui oscillant des couloirs (3), caractérisé en ce que les dentures s'étendent sur toute la longueur axiale des couloirs, et en ce que les couloirs sont des tronçons d'une bande laminée au profil souhaité incluant les dentures.

7. Joint selon la revendication 1, caractérisé en ce que pour chaque couloir (3) une clavette (34) cylindrique est logée en partie dans un évidement de la face de roulement (4) du couloir (3) et en partie dans un évidement de la face de roulement (36) du berceau.

8. Joint selon l'une des revendications 1 à 7, dans lequel les couloirs (3) sont couplés angulairement entre eux par roulement sans glissement mutuel de faces de couplage, caractérisé en ce que pour chaque couple de faces de couplage, une clavette (33) cylindrique est logée dans deux évidements en regard appartenant chacun à l'une des faces de couplage du couple de faces de couplage.

9. Joint selon l'une des revendications 1 à 7, caractérisé en ce que les couloirs (3) sont reliés entre eux par des articulations (31) selon des axes parallèles à l'axe (OZ) de l'organe (1) auquel les couloirs (3) sont associés.

10. Joint selon la revendication 9, caractérisé en ce que chaque articulation est réalisée par une clavette (31) cylindrique logée dans deux évidements en regard appartenant chacun à l'un des couloirs (3) associés à l'articulation considérée.

11. Joint de transmission selon l'une des revendications 1 à 10, caractérisé en ce que le premier organe comprend un fût (42) entourant les couloirs et comportant entre les couloirs des renflements intérieurs (38) traversés par des alésages (39) dans lesquels sont engagées des vis (40) de fixation du fût à une bride (43).

12. Joint selon l'une des revendications 1 à 11, caractérisé en ce que le montage oscillant des éléments oscillants est tel que le moment de rappel des éléments oscillants sous l'action de la force centrifuge est sensiblement proportionnel à leur angle instantané d'oscillation.


**Patentansprüche**

1. Antriebsgelenk mit vier Antriebsverbindungen mit einem ersten Organ (1) mit vier Längsdurchgängen (3) und mit einem zweiten Organ (10), bei dem vier radiale Achsschenkel (11) jeweils in einem Kanal (3) so aufgenommen sind, daß sie sich darin in Längsrichtung bewegen und sich in Längsrichtung und seitlicher Richtung neigen können, und diese beiden Organe (1, 10) jeweils Achsen (OZ1, OZ) aufweisen, die im Winkel gegeneinander versetzt werden können, wobei sich jeder der Kanäle (3) gegen die Achse (OZ) des ihm zugeordneten Organs (1) öffnet und ein Pendelelement bildet, welches mit seiner radialen Außenseite (4) gleitfrei pendelnd auf einem mit einer unterschiedlichen Krümmung versehenen inneren Sattel (2) des zugeordneten Organs (1) rollen kann, so daß es um eine Achse ($S_o$, S) parallel zur Achse (OZ) des zugeordneten Organs (1) pendeln und radial gegenüber einem seitlichen Neigungspunkt ($U_a$, $U_b$, $U_c$, $U_d$) des Achsschenkels (11) gegenüber seinem Kanal (3) versetzt werden kann, wobei jeder der pendelnden Kanäle (3) im Winkel mit den beiden benachbarten Durchgängen (3) verbunden ist, um zu diesen in entgegengesetzter Phase zu pendeln, **dadurch gekennzeichnet, daß** die Krümmungsradien (a, b) der Rollfläche der Kanäle (3) einerseits und der Sättel (2) andererseits so ausgewählt werden, daß jeder der Kanäle mit Hilfe der durch die Rotation des Gelenks verursachten Zentrifugalkraft (F) in die neutrale Stellung zurückgezogen wird, und dadurch, daß die Eigenfrequenz in Zyklen pro Zeiteinheit der Pendelbewegung der einzelnen Kanäle (3) unter der Rückzugswirkung der Zentrifugalkraft (F) bei einer bestimmten Geschwindigkeit weitgehend gleich dieser Geschwindigkeit oder doppelt so groß wie diese Geschwindigkeit ist, ausgedrückt in der Anzahl der während dieser Zeiteinheit erfolgten Umdrehungen, und dadurch, daß für jedes pendelnde Element folgender Gleichung entspricht:

$$\frac{ab}{b-a} = (4\rho^2 \frac{m}{M} + Rt) \frac{1}{R-t}$$

darin ist:

a = der Krümmungsradius der Rollfläche des pendelnden Elementes,
b = der Krümmungsradius der Rollfläche des zugeordneten Organs,
= der mittlere Kreisdrehungsradius des Schwerpunktes des pendelnden Elementes,
m = die Masse des pendelnden Elementes,

M = die Gesamtmasse, welche die Zentrifugalkraft für den Rückzug des pendelnden Elementes in die neutrale Stellung erzeugt,

R = der Abstand zwischen dem Rollpunkt und der Achse des dem pendelnden Element zugeordneten Organs,

t = der Abstand zwischen dem Rollpunkt und dem Schwerpunkt des pendelnden Elementes,

und dadurch, daß das Gelenk weiterhin weitgehend folgender Gleichung entspricht:

$$e = \frac{1}{\sqrt{2}} [R - (4\rho^2 \frac{m}{M} + Rt) \frac{1}{R\text{-}t}]$$

darin bedeutet:

e ≠ 0: e repräsentiert den Krümmungsradius der gleitfreien Rollflächen, mit deren Hilfe die pendelnden Elemente untereinander winklig verbunden sind, und die Flächen sind konvex wenn e>0 und konkav wenn e>0 ist,

e = 0: jedes der pendelnden Elemente ist mit den beiden benachbarten pendelnden Elemente gelenkig verbunden.

2. Antriebsgelenk nach Anspruch 1, in dem die radiale Außenfläche (4) der Kanäle und die Sättel (2) des zugeordneten Organs (1) Verzahnungen aufweisen, welche mit Hilfe der pendelnden Auflage der Kanäle miteinander in Eingriff gebracht werden,

**dadurch gekennzeichnet, daß** diese Verzahnungen an den beiden axialen äußeren Enden der Kanäle (3) angeordnet sind und durch glatte Flächen zwischen den Durchgängen getrennt werden.

3. Antriebsgelenk nach Anspruch 2,

**dadurch gekennzeichnet, daß** diese glatten Flächen gleitfreie Rollflächen sind.

4. Antriebsgelenk nach einem der Ansprüche 2 oder 3,

**dadurch gekennzeichnet, daß** die Verzahnungen der Sättel durch mindestens einen angesetzten Ring (29) getragen werden, welcher gleichzeitig einen axialen Feststellring für die Kanäle (3) bildet.

5. Antriebsgelenk nach einem der Ansprüche 2 bis 4,

**dadurch gekennzeichnet, daß**

die Kanäle (3) aus U-förmig gebogenen Blechen bestehen, in die die Verzahnungen der Kanäle kalt eingebracht werden.

6. Antriebsgelenk nach Anspruch 5, in dem die radiale Außenfläche (4) der Kanäle (3) und die Sättel (2) des zugeordneten Organs (1) miteinander im Eingriff stehende Verzahnungen für die pendelnde Auflage der Kanäle (3) aufweisen,

**dadurch gekennzeichnet, daß**

sich diese Verzahnungen über die gesamte axiale Länge der Kanäle erstrecken, und dadurch, daß diese Kanäle Abschnitte eines entsprechend dem gewünschten Profil laminierten Bandes sind, welches die Verzahnungen einschließt.

7. Antriebsgelenk nach Anspruch 1,

**dadurch gekennzeichnet, daß**

für jeden der Kanäle (3) ein zylindrischer Keil (34) teilweise in eine Einsenkung in der Rollfläche (4) des Durchgangs (3) und teilweise in eine Einsenkung in der Rollfläche (36) des Sattels eingesetzt ist.

8. Antriebsgelenk nach einem der Ansprüche 1 bis 7, in dem die Kanäle (3) untereinader durch das jeweilige gleitfreie Rollen der Verbindungsflächen in einem Winkel miteinander verbunden sind,

**dadurch gekennzeichnet, daß**

für jedes Paar der Verbindungsflächen ein zylindrischer Keil (33) in zwei gegenüberliegende Vertiefungen eingesetzt ist, die jeweils zu einer der Verbindungsflächen der paarweise angeordneten Verbindungsflächen gehören.

9. Antriebsgelenk nach einem der Ansprüche 1 bis 7,

**dadurch gekennzeichnet, daß**

die Kanäle untereinander durch Gelenkverbindungen (31) in Achsen verbunden sind, welche parallel zur Achse (OZ) des Organs (1) verlaufen, dem die Kanäle (3) zugeordnet sind.

**10.** Antriebsgelenk nach Anspruch 9,
**dadurch gekennzeichnet, daß**
jede der Gelenkverbindungen mit Hilfe eines zylindrischen Keils (31) hergestellt wird, welcher in zwei gegenüberliegenden Vertiefungen eingesetzt ist, die jeweils zu einem dieser Gelenkverbindung zugeordneten Kanal (3) gehören.

**11.** Antriebsgelenk nach einem der Ansprüche 1 bis 10,
**dadurch gekennzeichnet, daß**
das erste Organ einen die Kanäle umgebenden Schaft (42) enthält und der zwischen den Durchgängen innere Verstärkungen (38) enthält, die mit Innengewinden (39) versehen sind, in welche die Schrauben (40) für die Befestigung des Schaftes an einem Flansch (43) eingreifen.

**12.** Antriebsgelenk nach einem der Ansprüche 1 bis 11,
**dadurch gekennzeichnet, daß**
die pendelnde Montage der pendelnden Elemente so ausgelegt ist, daß das Rückzugsmoment der pendelnden Elemente unter der Wirkung der Zentrifugalkraft weitgehend proportional zu ihrem momentanen Pendelwinkel verläuft.

## Claims

**1.** Articulated transmission joint with four drive connections, comprising a first member (1) with four longitudinal tracks (3) and a second member (10) whose four radial trunnions (11) are each received in one track (3) with the possibility of longitudinal displacement therein and of longitudinal and lateral inclination therein, these two members (1, 10) having respective axes (OZ1, OZ) which may be angularly offset with respect to each other, each track (3) opening towards the axis (OZ) of the member (1) with which it is associated and constituting an oscillating element rolling, without sliding, by its radially outer face (4) in an oscillating manner on an inner cradle (2), of different curvature, of the member (1) with which it is associated, so as to be able to oscillate about an axis ($S_o$, S) parallel to the axis (OZ) of the said associated member (1) and radially offset with respect to a centre ($U_a$, $U_b$, $U_c$, $U_d$) of lateral inclination of the trunnion (11) with respect to its track (3), each oscillating track (3) being angularly coupled to the two adjacent tracks (3) to oscillate in phase opposition with respect to them, characterised in that: the radii of curvature (a, b) of the rolling face of the tracks (3) on the one hand, and of the cradles (2) on the other hand, are chosen so that each track is restored to the neutral position by the centrifugal force (F) due to the rotation of the joint, and in that the natural oscillation frequency, expressed in cycles per unit of time, of each track (3) under the restoring action of the centrifugal force (F) at a given speed is substantially equal to twice this speed expressed in number of revolutions during the said unit of time; in that for each oscillating element, the relation

$$\frac{ab}{b-a} = (4\,\rho^2\,\frac{m}{M} + Rt)\,\frac{1}{R-t}$$

holds,
    in which

a = radius of curvature of the rolling face of the oscillating element
b = radius of curvature of the rolling face of the associated member
$\rho$ = mean radius of gyration of the centre of gravity of the oscillating element
m = mass of the oscillating element
M = total mass producing the centrifugal force for restoring the oscillating element to the neutral position
R = distance between the rolling point and the axis of the member associated with the oscillating element
t = distance between the rolling point and the centre of gravity of the oscillating element, and in that, for the joint, in addition the following relation

$$e = \frac{1}{\sqrt{2}}\left[R - (4\,\rho^2\,\frac{m}{M} + Rt)\,\frac{1}{R-t}\right]$$

holds substantially,

with the following table of interpretation:

e ≠ O: e represents the radius of curvature of faces for rolling without sliding by which the oscillating elements are angularly coupled to one another, and the faces are convex if e>O and concave if e<O

e = O: each oscillating element is articulated to the two neighbouring oscillating elements.

2. Joint according to Claim 1, in which the radially outer face (4) of the tracks (3) and the cradles (2) of the associated member (1) comprise interengaged teeth for the oscillating support of the tracks, characterised in that the teeth are adjacent to the two axial ends of the tracks (3) and separated by smooth faces between the tracks.

3. Joint according to Claim 2, characterised in that the smooth faces are faces for rolling without sliding.

4. Joint according to Claim 2 or 3, characterised in that the teeth of the cradles are borne by at least one attached ring (29) which at the same time forms a ring for the axial immobilisation of the tracks (3).

5. Joint according to one of Claims 2 to 4, characterised in that the tracks (3) are metal sheets bent in the shape of a U, in which the teeth of the tracks are cold-formed.

6. Joint according to Claim 5, in which the radially outer face (4) of the tracks (3) and the cradles (2) of the associated member (1) comprise interengaged teeth for the oscillating support of the tracks (3), characterised in that the teeth extend over the entire axial length of the tracks, and in that the tracks are sections of a strip rolled with the desired profile including the teeth.

7. Joint according to Claim 1, characterised in that for each track (3) a cylindrical key (34) is accommodated partly in a recess of the rolling face (4) of the track (3) and partly in a recess of the rolling face (36) of the cradle.

8. Joint according to one of Claims 1 to 7, in which the tracks (3) are angularly coupled to one another by the mutual rolling without sliding of coupling faces, characterised in that for each pair of coupling faces a cylindrical key (33) is accommodated in two facing recesses each belonging to one of the coupling faces of the pair of coupling faces.

9. Joint according to one of Claims 1 to 7, characterised in that the tracks (3) are connected to one another by articulations (31) along axes parallel to the axis (OZ) of the member (1) with which the tracks (3) are associated.

10. Joint according to Claim 9, characterised in that each articulation is formed by a cylindrical key (31) accommodated in two facing recesses each belonging to one of the tracks (3) associated with the articulation in question.

11. Transmission joint according to one of Claims 1 to 10, characterised in that the first member comprises a barrel (42) surrounding the tracks and having, between the tracks, inner bulges (38) traversed by bores (39) in which there are inserted screws (40) for fixing the barrel to a flange (43).

12. Joint according to one of Claims 1 to 11, characterised in that the oscillating mounting of the oscillating elements is such that the restoring moment of the oscillating elements under the action of the centrifugal force is substantially proportional to their instantaneous angle of oscillation.

EP 0 520 846 B1

FIG.2

FIG.1

13

EP 0 520 846 B1

FIG.3

FIG.4

## FIG. 5

## FIG. 6

## FIG. 7

EP 0 520 846 B1

FIG.9

31
32
a
b

FIG.10

34
36
1
e
a
33
37
37
b=∞

2
4
1
a
3
b
7
7
12

FIG.8

16

FIG.12

FIG.11